(19) Europäisches Patentamt
European Patent Office
Office européen des brevets

(11) **EP 4 182 266 B1**

(12) **EUROPÄISCHE PATENTSCHRIFT**

(45) Veröffentlichungstag und Bekanntmachung des Hinweises auf die Patenterteilung:
**03.01.2024   Patentblatt 2024/01**

(21) Anmeldenummer: **20742723.8**

(22) Anmeldetag: **17.07.2020**

(51) Internationale Patentklassifikation (IPC):
*C01B 33/03* $^{(2006.01)}$     *C01B 33/029* $^{(2006.01)}$

(52) Gemeinsame Patentklassifikation (CPC):
**C01B 33/03; C01B 33/029**

(86) Internationale Anmeldenummer:
**PCT/EP2020/070298**

(87) Internationale Veröffentlichungsnummer:
**WO 2022/012755 (20.01.2022 Gazette 2022/03)**

(54) **VERFAHREN ZUR HERSTELLUNG VON POLYKRISTALLINEM SILICIUMGRANULAT**

METHOD FOR PRODUCING POLYCRYSTALLINE SILICON GRANULES

MÉTHODE DE PRODUCTION DE GRANULÉS DE SILICIUM POLYCRISTALLIN

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**24.05.2023   Patentblatt 2023/21**

(73) Patentinhaber: **Wacker Chemie AG**
**81737 München (DE)**

(72) Erfinder:
• GOTTANKA, Michael
  **84524 Neuötting (DE)**
• HERTLEIN, Harald
  **84489 Burghausen (DE)**
• KÖNINGER, Benedikt
  **90768 Fürth (DE)**

(74) Vertreter: **Belz, Ferdinand et al**
**Wacker Chemie AG**
**Hanns-Seidel-Platz 4**
**81737 München (DE)**

(56) Entgegenhaltungen:
EP-A2- 2 653 446          EP-B1- 2 653 446
DE-A1-102013 208 071

**Beschreibung**

Die Erfindung betrifft ein Verfahren zur Herstellung von polykristallinem Siliciumgranulat in einem Wirbelschicht-reaktor, wobei als Regelgröße die Temperatur der Wirbelschicht $T_{WS}$ als Temperatur $T_{Abgas,WS}$ eines Abgasstroms aus dem Wirbelschichtbereich $\dot{m}_{22,Abgas,WS}$ mittels der Stoff- und Energiebilanz eines Bilanzraums I und/oder eines Bilanzraums II bestimmt wird.

Polykristallines Siliciumgranulat (im Folgenden als Granulat bezeichnet) wird in einem Wirbelschicht- reaktor (auch als Fließbettreaktor bezeichnet) produziert. Dies geschieht durch Fluidisierung von Silicium-Keimpartikeln mittels einer Gasströmung in einer Wirbelschicht, wobei diese über eine Heizvorrichtung auf hohe Temperaturen aufgeheizt wird. Durch Zugabe eines siliciumhaltigen Reaktionsgases kommt es zu einer Abscheidereaktion an der heißen Partikeloberfläche, wobei sich elementares Silicium auf den Keimpartikeln abscheidet. Die Keimpartikel wachsen dadurch im Durchmesser an. Durch den regelmäßigen Abzug von angewachsenen Partikeln und Zugabe weiterer Keimpartikel kann das Verfahren kontinuierlich betrieben werden. Als siliciumhaltiges Reaktionsgas können beispielsweise Halogenverbindungen (z.B. Chlorsilane oder Bromsilane), Monosilan ($SiH_4$) und Mischungen dieser Gase mit Wasserstoff eingesetzt werden. Während der Abscheidung des elementaren Siliciums entsteht Abgas, das sich aus nicht umgesetztem Reaktionsgas und gasförmigen Nebenprodukten, insbesondere Halogensilane, zusammensetzt.

Abscheideverfahren und Vorrichtungen zu deren Durchführung sind hinlänglich bekannt. Beispielsweise kann auf EP 1 990 314 A2 und EP 2 662 334 A1 verwiesen werden.

Generell definiert die Temperatur in der Wirbelschicht (Wirbelschichttemperatur) wesentliche Produkt- und Prozessparameter. Für eine optimale Produktqualität und wirtschaftliche Prozessführung ist eine genaue Einstellung der Wirbelschichttemperatur essenziell.

Ferner ist für gewöhnlich ein möglichst konstant niedriger Chlorgehalt für die Performance von Granulat in seiner Folgeanwendung von großer Bedeutung. Die Performance ist z.B. gut, wenn Spritzeffekte beim Ziehen von Einkristallen minimiert oder vermieden werden. Grundsätzlich stellt Chlor eine Hauptverunreinigung bei der Granulatherstellung dar. Der sich im Granulat einstellende Chlorgehalt ist abhängig von den Prozessbedingungen im Wirbelschichtreaktor und insbesondere der Wirbelschichttemperatur.

Die Wirbelschichttemperatur übt zudem einen Einfluss aus auf die Staubbildung, den spezifischen Energieverbrauch und die Reaktorlaufzeit, weshalb eine genaue, möglichst verzögerungsfreie Regelung der Temperatur angestrebt wird.

Allerdings ist eine direkte Messung der Wirbelschichttemperatur, z.B. mit einem Thermoelement, nachteilig, da sich die Anwesenheit des Thermoelements generell negativ auf die Prozess- und/oder Produktqualität auswirkt. Zum einen kann sich auf dem Thermoelement kontinuierlich Silicium abscheiden und die Prozesslaufzeit limitieren. Zum anderen kann das Produkt durch physikalische und chemische Prozesse an der Oberfläche des Thermoelements verunreinigt werden. Ein Wirbelschichtreaktor mit einem im Reaktionsraum angeordneten und verkapselten Pyrometer oder Thermoelement ist beispielsweise in der EP 2 514 521 A1 beschrieben.

Die EP 2 653 446 A2 beschreibt ein Verfahren zur Granulatherstellung, bei dem als Regelgröße die Konzentration von HCl im Abgas gemessen und als Stellgröße die Rate der Zudosierung frischer Keimpartikel und die Leistung der Heizvorrichtung gesteuert werden. Auch hier kann die Temperatur mit einem Pyrometer bestimmt werden.

Eine Messung der Wirbelschichttemperatur über ein Pyrometer ist generell problematisch, da infolge der Staubbildung der Strahlengang gestört ist. Dadurch wird eine exakte temperaturabhängige Reaktorsteuerung unmöglich.

Der Erfindung lag daher die Aufgabe zugrunde, ein Verfahren bereitzustellen, mit welchem die Wirbelschichttemperatur störungsfrei bestimmt werden kann.

Diese Aufgabe wird gelöst durch ein Verfahren zur Herstellung von Granulat in einem Wirbelschichtreaktor, wobei in einem Wirbelschichtbereich kontinuierlich zugeführte Keimpartikel mittels einer Gasströmung in einer Wirbelschicht fluidisiert werden, wobei der Wirbelschichtbereich mit einer Heizvorrichtung über die Reaktorwand geheizt wird, wobei durch Zufuhr eines Wasserstoff und Silan und/oder Halogensilan enthaltenden Zugasstroms elementares Silicium an den Keimpartikeln unter Bildung des Granulats abgeschieden wird, und wobei in einem kontinuierlichen Prozess das Granulat als Produktstrom aus dem Wirbelschichtreaktor abgeführt wird, wobei als Regelgröße die Wirbelschichttem-peratur $T_{WS}$ als Temperatur $T_{Abgas,WS}$ eines Abgasstroms aus dem Wirbelschichtbereich $\dot{m}_{22,Abgas,WS}$ mittels der Stoff- und Energiebilanz eines Bilanzraums I und/oder eines Bilanzraums II bestimmt wird.

Der Bilanzraum I wird dabei gebildet aus der

- Enthalpie $\dot{H}_{16}$ des Zugasstroms $\dot{m}_{16,Zugas}$,
- Enthalpie $\dot{H}_{21}$ eines Keimpartikelstroms in den Wirbelschichtbereich $\dot{m}_{21,KP,WS}$,
- Enthalpie $\dot{H}_{18}$ des Produktstroms $\dot{m}_{18,Produkt}$,
- Enthalpie $\dot{H}_{22}$ des Abgasmassenstroms aus dem Wirbelschichtbereich $\dot{m}_{22,Abgas,WS}$,
- Reaktionsenthalpie $\Delta_R H_{23}$,
- Heizleistung der Heizvorrichtung $Q_{20}$,

- Energieabfuhr aus dem Reaktor im Wirbelschichtbereich $Q_{24}$.

Die Enthalpie $\dot{H}_{22}$ des Abgasstroms ergibt sich für den Bilanzraum I aus der Gleichung (10).

$$\dot{H}_{22} = \dot{H}_{16} - \dot{H}_{18} - Q_{24} - \Delta_R H_{23} + Q_{20} + \dot{H}_{21} \tag{10}$$

Der Bilanzraum II wird gebildet aus der

- Enthalpie $\dot{H}_{21}$ des Keimpartikelstroms in den Wirbelschichtbereich $\dot{m}_{21,KP,WS}$,
- Enthalpie $\dot{H}_{17}$ des Keimpartikelstroms in den Reaktor $\dot{m}_{17,KP,Reaktor}$,
- Enthalpie $\dot{H}_{22}$ des Abgasmassenstroms aus dem Wirbelschichtbereich $\dot{m}_{22,Abgas,WS}$,
- Enthalpie $\dot{H}_{19}$ eines Abgasstroms aus dem Reaktor $\dot{m}_{19,Abgas,Reaktor}$,
- Energieabfuhr aus dem Reaktor im Bereich oberhalb der Wirbelschicht $Q_{25}$.

Die Enthalpie $\dot{H}_{22}$ des Abgasstroms ergibt sich für den Bilanzraum II aus der Gleichung (11).

$$\dot{H}_{22} = -\dot{H}_{21} + \dot{H}_{17} - \dot{H}_{19} - Q_{25} \tag{11}$$

Die Wirbelschichttemperatur $T_{WS}$ ergibt sich dann aus der Gleichung (12).

$$T_{WS} = T_{Abgas,WS} = \frac{\dot{H}_{22}}{\dot{m}_{22,Abgas,WS} * c_{p,22}} \tag{12}$$

$c_{p,22}$ entspricht dabei der Wärmekapazität des Abgasstroms.

In Abhängigkeit der so bestimmten Regelgröße $T_{WS}$ wird nun zumindest die Heizleistung $Q_{20}$ als Stellgröße derart gesteuert, dass $Q_{20}$ in einem Bereich von 0,5 bis 3 kW, bevorzugt von 1 bis 2 kW, besonders bevorzugt von 1,3 bis 1,6 kW, pro Kilogramm Silicium in der Wirbelschicht liegt. Generell wird bei Unterschreiten einer Solltemperatur $T_{WS}$ die Heizleistung erhöht und bei Überschreiten einer Solltemperatur $T_{WS}$ die Heizleistung verringert.

Ziel der Steuerung (Regelung) ist eine wirtschaftlich optimale Prozessführung, welche eine konstante Produktqualität, insbesondere in Bezug auf den Chlorgehalt, gewährleistet. Auf den Reaktor können Störgrößen (z.B. eine unterschiedliche Fluidisierung der Wirbelschicht, aufgrund von Schwankungen der Partikelgröße) wirken, weshalb $T_{WS}$ und damit der Chlorgehalt im Produkt schwanken kann.

Die primäre Stellgröße für die Steuerung ist $T_{WS}$, welche der berechneten Abgastemperatur aus der Wirbelschicht nach der Energiebilanz entspricht (Primärregelung). Bei einer Abweichung wirkt die Steuerung durch eine Veränderung von Stellgrößen. Als Stellgröße dient $Q_{20}$. Wird ein Sollwert von $T_{WS}$ nicht erreicht, wird $Q_{20}$ erhöht, wird $T_{WS}$ überschritten, wird $Q_{20}$ verringert.

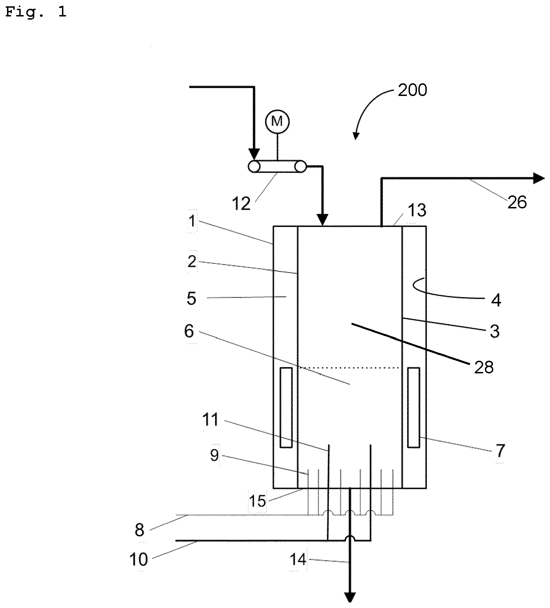

Zur Veranschaulichung der Bilanzräume I und II ist in der Figur 1 zunächst der allgemeine Aufbau eines Wirbelschichtreaktors 200 dargestellt. Dieser umfasst einen Reaktorbehälter 1, in welchen ein Reaktorrohr 2, das ggf. segmentiert sein kann, eingesetzt ist. Das Reaktorrohr 2 ist zwischen einem Reaktorkopf 13 und einem Reaktorboden 15 eingespannt. Zwischen einer Innenwand 4 des Reaktorbehälters 2 und einer Außenwand 3 des Reaktorrohrs 2 befindet sich ein Zwischenraum 5. Dieser beinhaltet üblicherweise Isolationsmaterial und kann mit einem Inertgas gefüllt sein. Der Druck im Zwischenraum 5 ist üblicherweise höher als im Inneren des Reaktorrohrs 2. Im Reaktorinneren befindet sich ein Wirbelschichtbereich 6, in welchem sich im Betrieb die Wirbelschicht befindet, und ein Bereich 28 oberhalb des Wirbelschichtbereichs 6. Der Wirbelschichtbereich 6 wird mittels einer Heizvorrichtung 7 geheizt. Im Bereich 28, einer nicht beheizten Expansionszone, ist die Querschnittsfläche gegenüber dem Wirbelschichtbereich 6 vergrößert, um einen Austrag von Partikeln zu verhindern. Über eine Leitung 8 und Düsen 9 wird dem Reaktionsrohr 2 ein Fluidisierungsgas zugeführt. Über eine Leitung 10 und Düsen 11 erfolgt die Zuführung eines Reaktionsgasgemischs, das Wasserstoff und Silan und/oder Halogensilan umfasst (Zugasstrom). Die Höhe der Düsen 11 zur Zuführung des Reaktionsgasgemischs kann sich von der Höhe der Düsen 9 zur Zuführung des Fluidisierungsgases unterscheiden. Über eine Vorrichtung 12 werden dem Reaktorrohr 2 am Reaktorkopf 13 Keimpartikel zugeführt. Fertiges Granulat wird über eine Produktentnahmeleitung 14 am Reaktorboden 15 entnommen. Am Reaktorkopf 13 wird ferner Abgas über eine Abgasentnahmeleitung 26 abgeführt. In der Abgasentnahmeleitung 26 wird üblicherweise ein Probenstrom für einen Gaschromatographen entnommen.

Der Reaktor wird wie folgt betrieben. Zugas wird dem Reaktor zugeführt. Es wird Startmaterial in Form von Siliciumgranulat in den Reaktor gefüllt und fluidisiert. In einer Aufheizphase wird die Heizleistung in die Wirbelschicht erhöht. Die Energieerhöhung erfolgt so lange bis ein Sollwert *Tws* erreicht hat und sich der Reaktor in einem stationären Zustand befindet. In diesem Zustand liefert der Reaktor eine optimale Produktqualität und es ist gleichzeitig gewährleistet, dass der Reaktor kontrolliert mit einer langen Laufzeit produziert. Eine stabile Produktqualität ist dadurch gekennzeichnet, dass sich der Chlorgehalt im Produkt in einem gewünschten Bereich befindet. Überschreitet die Regelgröße *Tws* einen Grenzwert, kann der Reaktor frühzeitig, z.B. durch Sinterung der Granulatpartikel an der Wand, ausfallen. Unterschreitet *Tws* einen Grenzwert, kann dies zu unerwünscht hohen Chlorgehalten im Produkt führen.

Die Fluidisierung in der Wirbelschicht wird zugunsten einer effizienten Prozessführung mit langer Laufzeit bei geringer Staubbildung geregelt. Die Fluidisierung bestimmt sich aus dem Verhältnis aus Gasgeschwindigkeit in der Wirbelschicht $u$ und Minimalfluidisationsgeschwindigkeit $u_{mf}$ und kann als Funktion von Druck und *Tws,* Sauterdurchmesser der Partikel in der Wirbelschicht $ds$, Zugasmenge und -zusammensetzung sowie Lockerungsporosität $\Psi_{mf}$ berechnet werden. Ist die Gasgeschwindigkeit gegenüber $u_{mf}$ zu gering, ist die Wirbelschicht nicht ausreichend fluidisiert, und es können sich lokale Überhitzungen bilden, welche zu Sinterungen in der Wirbelschicht führen. Ist die Gasgeschwindigkeit gegenüber $u_{mf}$ zu hoch, nimmt die Größe von Blasen in der Wirbelschicht zu, und es kommt zu einer höheren Staubbildungsrate im Prozess. Für eine optimale Prozessführung wird das Verhältnis $u/u_{mf}$ durch eine Veränderung der Gasmenge und der Partikelgröße $ds$ in der Wirbelschicht über die Dosierung von Keimpartikeln in die Wirbelschicht konstant gehalten.

Die Wirbelschichttemperatur *Tws* wird über die Energie- und Stoffbilanz des Reaktors berechnet.

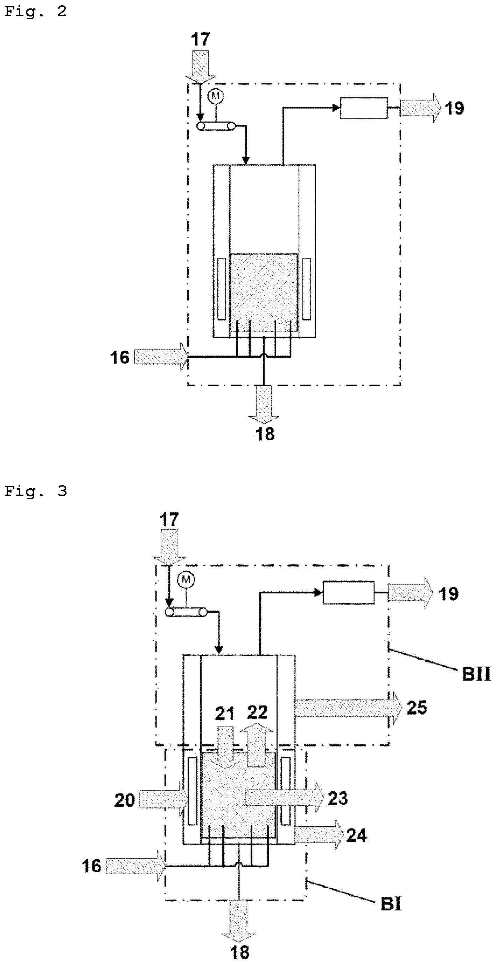

In Figur 2 ist der Bilanzraum (gestricheltes Rechteck) für die Stoffbilanz, die den Bilanzräumen I und II zugrunde liegt, anhand des Reaktors aus Figur 1, dargestellt. Aus Gründen der Übersichtlichkeit wurden die Leitung 8 und Düsen 9 ausgespart. Ferner wurde auf eine erneute Bezeichnung der Reaktorelemente verzichtet. Folgende Stoffmengenströme werden bilanziert:

- Zugasstrom 16: $\dot{m}_{16,Zugas}$
- Keimpartikelstrom zum Reaktor 17: $\dot{m}_{17,KP,Reaktor}$
- Produktstrom 18: $\dot{m}_{18,Produkt}$
- Abgasstrom aus dem Reaktor 19: $\dot{m}_{19,Abgas,Reaktor}$

Die Stoffmengenströme des Zugas, der Keimpartikel und des Produkts (Granulat) sind messbar (z.B. Massendurchflussmesser) und damit bekannt. Die Zusammensetzung des Abgasstroms (Stoffmengenanteil Silan/Chlorsilane) aus dem Reaktor kann über einen Gaschromatographen gemessen werden. Ergebnis der Messung ist der Stoffmengenanteil der Chlorsilane $y_i^*$ bezogen auf den Gesamt-Chlorsilan-Stoffmengenstrom im Abgas [mol$_i$/mol$_{Chlorsilan}$]. Die Analytik ist unten im Detail beschrieben.

Die Stoffmengenströme in Produktstrom und Abgasstrom werden über Schlüsselkomponenten und Schlüsselreaktionen berechnet. Es werden die drei Elemente Si, Cl und H bilanziert. Enthält das Zugas neben $H_2$ auch $SiCl_4$, $SiHCl_3$ und/oder $SiH_2Cl_2$ treten sieben relevante Spezies auf (i=7): Si, $H_2$, HCl, $SiCl_4$, $SiHCl_3$, $SiH_2Cl_2$ und $SiH_3Cl$. Um das System vollständig zu beschreiben, sind j = 7 - 3 = 4 unabhängige Reaktionsgleichungen notwendig.

(I) $4\ SiHCl_3 \longrightarrow 3\ SiCl_4 + 2H_2 + Si$
(II) $SiHCl_3 + H_2 \longrightarrow Si + 3\ HCl$
(III) $2\ SiHCl_3 \longrightarrow SiCl_4 + SiH_2Cl_2$
(IV) $2\ SiH_2Cl_2 \longrightarrow SiHCl_3 + SiH_3Cl$

Entsprechend der 4 unabhängigen Reaktionsgleichungen gibt es 4 unabhängige Schlüsselkomponenten: $SiCl_4$, $SiHCl_3$, $SiH_2Cl_2$ und $SiH_3Cl$.

Die Reaktionslaufzahl $\xi_i$ gibt den Reaktionsfortschritt der Teilreaktionen (I) bis (IV) an. Die Stoffmengenänderung einer Komponente lässt sich über die Reaktionslaufzahlen berechnen.

Der Stoffmengenstrom an Chlorsilanen im Abgas wird durch die Reaktionen (I) und (II) verringert. Der Stoffmengenstrom an Chlorsilan im Abgas berechnet sich mit den Reaktionslaufzahlen und dem Stoffmengenstrom an Chlorsilan im Zugas zu:

$$(1) \qquad \dot{N}_{Chlorsilan,Abgas} = \dot{N}_{Chlorsilan,Zugas} - \xi_I - \xi_{II}$$

Für die Stoffmengenänderung von $SiCl_4$ ergibt sich:

$$(2) \qquad \Delta\dot{N}_{SiCl4} = \dot{N}_{SiCl4,Abgas} - \dot{N}_{SiCl4,Zugas} = 3\xi_I + \xi_{III}$$

Der Stoffmengenstrom von SiCl$_4$ im Abgas lässt sich über den Stoffmengenanteil an SiCl$_4$ im Abgas und der Reaktionslaufzahlen berechnen.

$$(3) \qquad \dot{N}_{SiCl4,Abgas} = y^*_{SiCl4} \, \dot{N}_{Chlorsilan,Abgas} = y^*_{SiCl4} \left( \dot{N}_{Chlorsilan,Zugas} - \xi_I - \xi_{II} \right)$$

Aus Gleichung (2) und (3) ergibt sich für SiCl$_4$:

$$(4) \qquad y^*_{SiCl4} \left( \dot{N}_{Chlorsilan,Zugas} - \xi_I - \xi_{II} \right) - \dot{N}_{SiCl4,Zugas} = 3\xi_I + \xi_{III}$$

Analog lässt sich diese Gleichung für die Komponenten SiHCl$_3$, SiH$_2$Cl$_2$ und SiH$_3$Cl herleiten. Somit erhält man ein eindeutig lösbares Gleichungssystem von vier Gleichungen und den damit berechenbaren vier unbekannten Reaktionslaufzahlen.

Über die Reaktionslaufzahlen lassen sich die Stoffmengenströme im Abgas für alle Schlüsselkomponenten berechnen. Beispielhaft für SiCl$_4$:

$$(5) \qquad \dot{N}_{SiCl4,Abgas} = \dot{N}_{SiCl4,Zugas} + 3\xi_I + \xi_{III}$$

Somit können die einzelnen Reaktionsumsätze und die Stoffmengenströme aller Komponenten im Abgas berechnet werden.

In Figur 3 sind der Bilanzraum I (BI) und der Bilanzraum (BII) für die Energiebilanz anhand des Reaktors aus Figur 1 dargestellt.

Zur Berechnung der Energiebilanz werden alle Stoffmengen- und Energieströme über die Grenzen des jeweiligen Bilanzraums sowie die Reaktionsenthalpie berechnet. Für die Berechnung der Wirbelschichttemperatur *Tws* wird Bilanzraum I und/oder II herangezogen.

Der Bilanzraum I (BI) umfasst:

- Zugasstrom 16: $\dot{m}_{16,Zugas}$
- Produktstrom 18: $\dot{m}_{18,Produkt}$
- Kühlstrom 24 (Energieabfuhr aus dem Reaktor im Wirbelschichtbereich) : $Q_{24}$
- Reaktionsenthalpie 23: $\Delta_R H_{23}$
- Heizleistung der Heizvorrichtung 20; $Q_{20}$
- Keimpartikelstrom in die Wirbelschicht 21: $\dot{m}_{21,KP,WS}$
- Abgasstrom aus der Wirbelschicht 22: $\dot{m}_{22,Abgas,WS}$

Der Bilanzraum II (BII) umfasst:

- Keimpartikelstrom in die Wirbelschicht 21: $\dot{m}_{21,KP,WS}$
- Abgasstrom aus der Wirbelschicht 22: $\dot{m}_{22,Abgas,WS}$
- Keimpartikelstrom in den Reaktor 17: $\dot{m}_{17,KP,Reaktor}$
- Abgasstrom aus dem Reaktor 19: $\dot{m}_{19,Abgas,Reaktor}$
- Kühlstrom (Energieabfuhr aus dem Reaktor im Bereich oberhalb der Wirbelschicht) 25: $Q_{25}$

Die Enthalpie von Stoffmengenströmen über die Bilanzgrenze wird als Funktion von Massenstrom $\dot{m}_i$, Wärmekapazität $c_{p,i}$ und Temperatur $T_i$ berechnet:

$$(6) \qquad \dot{H}_i = \dot{m}_i * c_{p,i} * T_i$$

Der Reaktor wird durch Kühlmedien (z.B. im Reaktorboden) und die Umgebung gekühlt. Die Kühlleistung durch Kühlmedien wird über die Enthalpieänderung des Kühlmediums berechnet. Die Wärmeabgabe an die Umgebung kann bei ausreichender Isolation vernachlässigt werden. Gegebenenfalls kann eine durch Konvektion und Strahlung an die Umgebung abgegebene Wärmeabgabe abgeschätzt werden.

$$(7) \qquad Q_{24/25} = \dot{m}_{Kühlung} * \left( c_{p,ein} * T_{ein} - c_{p,aus} * T_{aus} \right)$$

Bei einer elektrischen Heizung wird die elektrische Leistung erfasst. Bei einer Heizung mit Heizmedium (z.B. Verbrennungsgase) wird die Enthalphieänderung des Heizmediums berechnet.

$$(8) \qquad Q_{20} = P_{elektrisch} \; oder \; Q_{20} = \dot{m} * (c_{p,ein} * T_{ein} - c_{p,aus} * T_{aus})$$

Die Reaktionsenthalpie wird über die Summe der Standardbildungsenthalpie der Edukte und Produkte berechnet. Die Edukt- und Produktzusammensetzung kann aus der oben beschriebenen Massenbilanz bestimmt werden.

$$(9) \qquad \Delta_R H_{23} = \sum \Delta H_{B,Produkte} - \sum \Delta H_{B,Edukte}$$

Zur Berechnung von *Tws* wird die Temperatur des Abgasstroms aus der Wirbelschicht über die Energiebilanz berechnet. Dieser hat aufgrund des thermischen Gleichgewichts in der Wirbelschicht die gleiche Temperatur wie die Wirbelschicht. Zudem wird angenommen, dass der Abgasstrom aus der Wirbelschicht 22 und der Abgasstrom aus dem Reaktor 24 die gleiche Zusammensetzung haben. Für den Keimpartikelstrom in die Wirbelschicht 21 wird angenommen, dass dieser die gleiche Temperatur wie der Abgasstrom aus der Wirbelschicht 22 besitzt. Vereinfachend kann ein quasistationärer, isobarer Prozess angenommen werden. Die Summe der Energie- und Enthalpieströme über die Bilanzgrenze sowie die Reaktionsenthalpie ist dabei 0.

Für den Bilanzraum I ergibt sich aufgelöst nach der Enthalpie $\dot{H}_{22}$ des Abgasmassenstroms aus dem Wirbelschichtbereich:

$$(10) \qquad \dot{H}_{22} = \dot{H}_{16} - \dot{H}_{18} - Q_{24} - \Delta_R H_{23} + Q_{20} + \dot{H}_{21}$$

Für den Bilanzraum II ergibt sich aufgelöst nach der Enthalpie $\dot{H}_{22}$ des Abgasmassenstroms aus dem Wirbelschichtbereich:

$$(11) \qquad \dot{H}_{22} = -\dot{H}_{21} + \dot{H}_{17} - \dot{H}_{19} - Q_{25}$$

Die Energiebilanz wird nach dem Abgasmassenstrom aus dem Wirbelschichtbereich 22 aufgelöst. Die Zusammensetzung des Abgasmassenstroms ist über die Messung eines Gaschromatographen bekannt. Der Abgasmassenstrom kann über die Reaktionslaufzahlen der Schlüsselreaktionen berechnet werden. Die Temperatur des Abgasmassenstrom aus der Wirbelschicht wird über die Enthalpie des Abgasmassenstroms aus der Energiebilanz über die mittlere spezifische Wärmekapazität des Abgasstroms berechnet.

$$(12) \qquad T_{WS} = T_{22} = \frac{\dot{H}_{22}}{\dot{m}_{22} * c_{p,22}(T)}$$

Die Wärmekapazität wird als eine Funktion der Temperatur berechnet.

$$(13) \qquad c_{p,i}(T) = a_0 + a_1 T + a_2 T^2 + a_3 T^3 + a_4 T^4$$

Somit kann Gleichung (12) iterativ gelöst werden.
Gemäß einer bevorzugten Ausführungsform des Verfahrens kann als eine weitere Stellgröße die Fluidisierung in der Wirbelschicht als Verhältnis aus Gasleerrohrgeschwindigkeit u und Minimalfluidisierungsgeschwindigkeit $u_{mf}$ derart gesteuert werden, dass $u/u_{mf}$ in einem Bereich von 1 bis 6, vorzugsweise von 2 bis 5, besonders bevorzugt von 3 bis 4, liegt (Sekundärregelung).
Als Kenngröße für die Fluidisierung in der Wirbelschicht wird das Verhältnis von Leerrohrgeschwindigkeit u zu Minimalfluidisationsgeschwindigkeit $u_{mf}$ berechnet. Es wird angenommen, dass die Gaszusammensetzung in der Wirbelschicht die gleiche Zusammensetzung hat wie das Abgas des Reaktors, welche über die Stoffbilanz bekannt ist. Über die Stoffbilanz kann das mittlere Stoffmengengewicht $\overline{M}$ und der Abgas-Stoffmengenstrom $\dot{N}$ berechnet werden.
Die Dichte des Gases in der Wirbelschicht wird über das ideale Gasgesetz berechnet:

$$\rho_{Gas} = \frac{p\bar{M}}{RT}$$

Über die Gasdichte wird die Leerrohrgeschwindigkeit u in der Wirbelschicht berechnet. *u* ergibt sich dann aus Gleichung (14):

$$(14) \qquad u = \frac{\dot{N}\bar{M}}{A\rho_{Gas}},$$

wobei

$\bar{M}$ = mittlere molare Masse des Gases in der Wirbelschicht [kg/mol]
N = Stoffmengenstrom des Abgases aus der Wirbelschicht [mol/s]
A = Querschnittsfläche der Wirbelschicht [m$^2$]
$\rho_{Gas}$ = Dichte des Gases in der Wirbelschicht [kg/m$^3$]
und wobei sich $u_{mf}$ aus Gleichung (15) ergibt:

$$(15) \qquad u_{mf} = 42,8(1-\psi)\frac{v}{d_S}\left[\sqrt{1 + 3,11 * 10^{-4}\frac{\Psi_{mf}^3}{(1-\Psi_{mf})^2}\frac{(\rho_{Partikel}-\rho_{Gas})gd_S^3}{\rho_{Gas}v^2}} - 1\right]$$

mit
$\psi$ = Festbettporosität
v = Viskosität des Gases in der Wirbelschicht [m$^2$/s]
*ds* = Sauterdurchmesser der Partikel in der Wirbelschicht [m]
$\Psi_{mf}$ = Lockerungsporosität
$\rho_{Partikel}$ = Dichte der Partikel in der Wirbelschicht [kg/m$^3$]
*g* = 9,81 m/s$^2$.

Vorzugsweise wird das Verhältnis $u/u_{mf}$ während des Verfahrens konstant gehalten. Das Verhältnis $u/u_{mf}$ hängt generell ab von Temperatur, Druck, Gasmenge- und Zusammensetzung sowie der Partikelgröße in der Wirbelschicht. Bei einem zu geringen Verhältnis $u/u_{mf}$ kann die Zugasmenge zur Wirbelschicht erhöht und/oder die Partikelgröße in der Wirbelschicht über eine gesteigerte Zugabe von Keimpartikeln verringert werden. Bei einem zu hohen Verhältnis von $u/u_{mf}$ kann die Gasmenge zur Wirbelschicht verringert und/oder die Partikelgröße in der Wirbelschicht über eine geringere Zugabe von Keimpartikeln erhöht werden.
Die Dichte der Partikel in der Wirbelschicht liegt vorzugsweise in einem Bereich von 2,250 bis 2,330 g/cm$^3$, besonders bevorzugt von 2,280 bis 2,330 g/cm$^3$, insbesondere von 2,320 bis 2,330 g/cm$^3$.
Die Dichte der Siliciumpartikel in der Wirbelschicht kann durch Gasadsorptionsverfahren (Pyknometer) mit Heliumgas, vorzugsweise mit dem Gerät Pycnomatic ATC der Fa. Porotec, bestimmt werden. Das Probenvolumen kann z.B. 60 ml betragen. Die Dichte des Gases in der Wirbelschicht $\rho_{Gas}$ liegt vorzugsweise in einem Bereich von 0,5 bis 2 kg/m$^3$, besonders bevorzugt von 0,7 bis 1,2 kg/m$^3$.
Die Porosität des Festbetts $\psi$ liegt vorzugsweise in einem Bereich von 0,3 bis 0,36 kg/m$^3$ liegt, besonders bevorzugt beträgt ip 0,33.
Die Schüttdichte $\rho$ der Festbettschüttung kann nach ISO 967, z.B. mit einer Apparatur zur Bestimmung der Schüttdichte von der Fa. Landgraf Laborsysteme HLL GmbH bestimmt werden. Aus der Schüttdichte $\rho$ kann dann die Festbettporosität $\psi$ nach Formel (16) berechnet werden.

$$(16) \qquad \psi = \frac{\rho_{Partikel}-\rho}{\rho_{Partikel}-\rho_{Gas}}$$

Die Lockerungsporosität $\Psi_{mf}$ liegt vorzugsweise in einem Bereich von 0,33 bis 0,4, besonders bevorzugt beträgt sie 0,37.
Die Lockerungsporosität $\Psi_{mf}$ kann experimentell bestimmt werden (vgl. VDI-Wärmeatlas, 11. Auflage, L3.2 Strömungsformen und Druckverlust in Wirbelschichten). $\Psi_{mf}$ kann über die Ergun-Gleichung (17) am Lockerungspunkt berechnet werden:

$$(17) \qquad \frac{\Delta p}{L} = \left(1 - \Psi_{mf}\right)\left(\rho_{Partikel} - \rho_{Gas}\right) * g,$$

wobei

$\Delta p$: Differenzdruck Wirbelschicht am Lockerungspunkt [bara],
$L$: Höhe der Wirbelschicht am Lockerungspunkt [m].

Der Sauterdurchmesser der Partikel im Wirbelschichtreaktor *ds* liegt vorzugsweise in einem Bereich von 150 bis 10000 um, besonders bevorzugt von 500 bis 5000, insbesondere von 850 bis 2000 um.

Die Bestimmung von *ds* kann anhand der als Produkt erhaltenen Siliciumpartikel (Granulat) mittels Bildanalyse unter Einsatz eines Partikelanalysators mit dynamischer Bildanalyse (z.B. CAMSIZER P4 der Fa. Retsch Technology, dynamische Bildanalyse nach ISO 13322-2, Messbereich: 30 μm bis 30 mm, Art der Analyse: Trockenmessung von Pulvern und Granulaten)erfolgen. Gemäß einer weiteren Ausführungsform des Verfahrens kann als Stellgröße die Keimpartikel-Dosiermenge in Kilogramm Keimpartikel pro Kilogramm Silicium in der Wirbelschicht derart gesteuert werden, dass sie in einem Bereich von 0,01 bis 0,05, bevorzugt von 0,02 bis 0,03, liegt.

Die Massenströme $m_i$ des Keimpartikel- und Produktstroms können mit einem kontinuierlichen Online-Durchflusssystem für Schüttgüter gemessen werden (z.B. MF3000, Fa. Mütec Instruments). Die Masse des Siliciums in der Wirbelschicht kann kontinuierlich ermittelt werden. Dazu wird der Differenzdruck $\Delta p$ zwischen Reaktorboden und Reaktorkopf kontinuierlich bestimmt (z.B. mit dem elektronischen Differenzdrucksystem Deltabar FMD72 der Fa. Endress+Hauser).

$$\Delta p = p_{Boden} - p_{Kopf}$$

Dieser Differenzdruck entspricht dem Druckverlust der Wirbelschicht. Der Druckverlust ist proportional zum Bettgewicht $m_{Bett}$. Dieses lässt sich wie folgt berechnen:

$$m_{Bett} = \frac{\Delta p\, A}{g},$$

wobei

$m_{Bett}$: Masse des Siliciums in der Wirbelschicht [kg],
A: Querschnittsfläche der Wirbelschicht [m²].

Die Temperatur der Wirbelschicht *Tws* liegt in einem Bereich von 700 bis 1200°C, bevorzugt von 800 bis 1150°C, insbesondere von 850 bis 1100°C.

Vorzugseise weist das Granulat einen Chlorgehalt von 10 bis 70 ppmw, besonders bevorzugt von 15 bis 40 ppmw, auf.

Die Bestimmung des Chlorgehalts im Bulk des Granulats kann durch instrumentelle Neutronenaktivierungsanalyse (INAA; SEMI PV10) erfolgen. Der Chlorgehalt im Bulk wird in der Einheit "ppmw" gemessen. Auch eine Messung mittels Röntgenfluoreszenzanalyse ist möglich.

Die Zusammensetzung des Abgasmassenstroms 22 kann mit einem Gaschromatographen bestimmt werden.

Im Abgas können über eine Online-Analytik alle Komponenten der Abscheidereaktion detektiert und quantifiziert werden. Bei den Komponenten handelt es sich insbesondere um Chlorsilane, Chlorwasserstoff und Wasserstoff. Als Messeinrichtung kann ein Gaschromatograph mit Flammenionisationsdetektor und Wärmeleitfähigkeitsdetektor verwendet werden. Die für die Stoffbilanz benötigte Zusammensetzung der Chlorsilane im Abgas $y_i^*$ kann als Stoffmengenanteil des Chlorsilans i bezogen auf den Gesamt-Chlorsilan-Stoffmengenstrom im Abgas ausgegeben werden.

Generell können die Temperaturen der Kühl-, Zugas- und Abgasströme mit einem Thermoelement (z.B. Thermodraht Typ K nach DIN EN60584-1 mit einem Messbereich bis 1250°C) gemessen werden.

Die Massenströme $m_i$ von Zugas- und Kühlströmen können mittels Coriolis-Massedurchflussmesser (z.B. Fa.

Endress+Hauser, Modell Promass 83F) bestimmt werden.

Der spezifische Massenstrom an siliciumhaltigem Zugas beträgt vorzugsweise 400 bis 6500 kg/(h*m$^2$). Der spezifische Wasserstoffvolumenstrom beträgt vorzugsweise 800 bis 4000 Nm$^3$/(h*m$^2$). Das spezifische Wirbelbettgewicht $m_{Bett}$ beträgt vorzugsweise 500 bis 2000 kg/m$^2$. Die spezifische Silicium-Keimpartikeldosierrate beträgt vorzugsweise 1 bis 40kg/(h*m$^2$). Die spezifische Reaktorheizleistung beträgt vorzugsweise 800 bis 3000 kW/m$^2$.

Die elektrische Heizleistung $P_{elektrisch}$ kann als Leistung der Sekundärseite eines Anlagentransformators nach DIN EN 60076 bestimmt werden.

Die Messung der genannten Parameter erfolgt vorzugsweise kontinuierlich während der gesamten Verfahrensdauer.

Als Zugas wird neben H$_2$ vorzugsweise Trichlorsilan oder Dichlorsilan verwendet. Das Fluidisierungsgas ist vorzugsweise ausgewählt aus der Gruppe mit H$_2$, Argon, Stickstoff und Mischungen daraus.

Das Zugas kann über eine oder mehrere Düsen in die Wirbelschicht eingebracht werden. Die lokalen Gasgeschwindigkeiten am Austritt der Düsen betragen vorzugsweise 0,5 bis 200 m/s. Die Konzentration der siliciumhaltigen Zugas-Komponente beträgt bezogen auf die gesamte durch die Wirbelschicht strömende Gasmenge vorzugsweise 5 bis 50 mol-%, besonders bevorzugt 15 bis 40 mol-%.

Die Konzentration siliciumhaltigen Zugas-Komponente vor Eintritt in den Reaktor beträgt bezogen auf die gesamte Zugasmenge vorzugsweise 5 bis 80 mol-%, besonders bevorzugt 14 bis 60 mol-%.

Der absolute Reaktordruck bewegt sich bevorzugt im Bereich von 1 bis 10 bar, besonders bevorzugt 1,5 bis 5,5 bar.

**Fig. 1** zeigt den Aufbau eines Wirbelschichtreaktors.
**Fig. 2** zeigt den Bilanzraum für die Stoffbilanz.
**Fig. 3** zeigt die Bilanzräume I und II für die Energiebilanz.

**Beispiel**

Ein Wirbelschichtreaktor gemäß Fig. 1 wird neben H$_2$ mit Trichlorsilan oder Dichlorsilan betrieben (vgl. Tabelle 1).

Die Beispiele wurden in einem Reaktor mit einem Durchmesser von 400 mm durchgeführt. In Tabelle 1 handelt es sich um stationäre Betriebspunkte des Reaktors, d.h. die genannten Daten wurden über mehrere Stunden konstant gehalten.

Tabelle 1

| Chlorsilan | Druck | Chlorsilanmassenstrom | $H_2$ Normvolumenstrom | $T_{WS}$ (Erfindung) | $T_{WS}$ (Pyrometer) | HCl Abgas | Cl Granulat |
|---|---|---|---|---|---|---|---|
| - | bara | $kg/h/m^2$ | $Nm^3/h/m^2$ | $°C$ | $°C$ | vol% | ppmw |
| SiHCl3 | 4 | 3960 | 2550 | 950 | 815 | 1,80 | 31 |
| SiHCl3 | 4 | 1880 | 2950 | 950 | 920 | 1,55 | 33 |
| SiH2Cl2 | 4 | 1750 | 2990 | 760 | 625 | 0,5 | 1030 |
| SiH2Cl2 | 4 | 1750 | 2990 | 740 | 620 | 0,5 | 1380 |

Die Mengen an Chlorsilan und $H_2$ im Zugas sind bezogen auf die Querschnittsfläche der Reaktionszone (Wirbelschicht). *Tws* (Erfindung) ist die erfindungsgemäß berechnete Temperatur der Wirbelschicht, berechnet nach der Energiebilanz (siehe z.B. Tabelle II)

*Tws* (Pyrometer) ist eine mittels Pyrometer gemessene Temperatur der Wirbelschicht. Das Pyrometer ist am Reaktorkopf angebracht und von oben auf die Wirbelschicht gerichtet. Aufgrund der Staubbildung ist das Messignal gestört und die gemessene Temperatur liegt deutlich unter der erfindungsgemäß berechneten *Tws* (Erfindung) .

Aus der EP 2 653 446 A2 geht hervor, dass über den HCl-Wert im Abgas der Cl-Wert im Granulat geregelt werden kann. Der HCl-Wert im Abgas ergibt sich aus dem chemischen Gleichgewicht in der Wirbelschicht. Dieses chemische Gleichgewicht ist eine Funktion von Druck, Temperatur und Zusammensetzung des Zugas.

Tabelle 1 zeigt, dass der Cl-Wert im Granulat vielmehr eine Abhängigkeit von *Tws* (Erfindung) als vom HCl-Wert im Abgas ist. Eine Verfahrenssteuerung auf Basis von *Tws* (Erfindung) geht demnach mit einer Steigerung der Produktqualität einher. Erfolgt eine Reaktorsteuerung auf Basis des HCl-Werts im Abgas, kommt es bei einer Änderung des Reaktordruckes, des Chlorsilanes oder der Zugasmengen zum Reaktor zu einer inakzeptablen Anreicherung von Cl im Granulat.

*Tws* (Erfindung) wurde hier über den Bilanzraum I (normiert auf Querschnittsfläche Reaktor) bestimmt (vgl. Tabelle 2).

Tabelle 2

| | | | |
|---|---|---|---|
| Enthalpiestrom Zugas | $\dot{H}_{16}$ | 645.3 | kW/m$^2$ |
| Enthalpiestrom Produkt | $\dot{H}_{18}$ | -1.8 | kW/m$^2$ |
| Enthalpiestrom Kühlung | $Q_{24}$ | -341.4 | kW/m$^2$ |
| Reaktionsenthalpie | $\Delta_R H_{23}$ | 164.8 | kW/m$^2$ |
| Heizleistung | $Q_{20}$ | 1556.2 | kW/m$^2$ |
| Enthalpiestrom Keimpartikel | $\dot{H}_{21}$ | 0.3 | kW/m$^2$ |
| | | | |
| Enthalpiestrom Abgas aus Wirbelschicht | $\dot{H}_{22}$ | 1693.0 | kW/m$^2$ |
| Wärmekapazität Abgasstrom | $c_{p,22}$ | 1.6 | kJ/kgK |
| Massenstrom Abgas | $\dot{m}_{22}$ | 4050.6 | kg/h/m$^2$ |
| **Temperatur Abgasstrom** | $T_{WS} = T_{22}$ | **948.1** | **°C** |

**Patentansprüche**

1. Verfahren zur Herstellung von polykristallinem Siliciumgranulat in einem Wirbelschichtreaktor, wobei in einem Wirbelschichtbereich kontinuierlich zugeführte Keimpartikel mittels einer Gasströmung in einer Wirbelschicht fluidisiert werden, wobei der Wirbelschichtbereich mit einer Heizvorrichtung geheizt wird, wobei durch Zufuhr eines Wasserstoff und Silan und/oder Halogensilan enthaltenden Zugasstroms elementares Silicium an den Keimpartikeln unter Bildung des polykristallinen Siliciumgranulats abgeschieden wird, und wobei in einem kontinuierlichen Prozess das Siliciumgranulat als Produktstrom aus dem Wirbelschichtreaktor abgeführt wird, wobei als Regelgröße die Temperatur der Wirbelschicht *Tws* als Temperatur $T_{Abgas,WS}$ eines Abgasstroms aus dem Wirbelschichtbereich $\dot{m}_{22,Abgas,WS}$ mittels der Stoff- und Energiebilanz eines Bilanzraums I und/oder eines Bilanzraums II bestimmt wird, wobei sich der Bilanzraum I zusammensetzt aus der

   - Enthalpie $\dot{H}_{16}$ des Zugasstroms $\dot{m}_{16,Zugas}$,
   - Enthalpie $\dot{H}_{21}$ eines Keimpartikelstroms in den Wirbelschichtbereich $\dot{m}_{21,KP,WS}$,
   - Enthalpie $\dot{H}_{18}$ des Produktstroms $\dot{m}_{18,Produkt}$,
   - Enthalpie $\dot{H}_{22}$ des Abgasmassenstroms aus dem Wirbelschichtbereich $\dot{m}_{22,Abgas,WS}$,
   - Reaktionsenthalpie $\Delta_R H_{23}$,
   - Heizleistung der Heizvorrichtung $Q_{20}$,
   - Energieabfuhr aus dem Reaktor im Wirbelschichtbereich $Q_{24}$;
   und sich die Enthalpie des Abgasstroms $\dot{H}_{22}$ für den Bilanzraum I aus der Gleichung (10) ergibt

$$\dot{H}_{22} = \dot{H}_{16} - \dot{H}_{18} - Q_{24} - \Delta_R H_{23} + Q_{20} + \dot{H}_{21} \qquad (10);$$

und wobei sich der Bilanzraum II zusammensetzt aus der
- Enthalpie $\dot{H}_{21}$ des Keimpartikelstroms in den Wirbelschichtbereich $\dot{m}_{21,KP,WS}$,
- Enthalpie $\dot{H}_{17}$ des Keimpartikelstroms in den Reaktor $\dot{m}_{17,KP,Reaktor}$,
- Enthalpie $\dot{H}_{22}$ des Abgasmassenstroms aus dem Wirbelschichtbereich $\dot{m}_{22,Abgas,WS}$,
- Enthalpie $\dot{H}_{19}$ eines Abgasstroms aus dem Reaktor $\dot{m}_{19,Abgas,Reaktor}$,
- Energieabfuhr aus dem Reaktor im Bereich oberhalb der Wirbelschicht $Q_{25}$
und sich die Enthalpie $\dot{H}_{22}$ des Abgasstroms für den Bilanzraum II aus der Gleichung (11) ergibt

$$\dot{H}_{22} = -\dot{H}_{21} + \dot{H}_{17} - \dot{H}_{19} - Q_{25} \qquad (11);$$

wobei sich die Temperatur der Wirbelschicht $Tws$ aus der Gleichung (12) ergibt

$$T_{WS} = T_{Abgas,WS} = \frac{\dot{H}_{22}}{\dot{m}_{22,Abgas,WS}*c_{p,22}}, \quad \text{mit} \qquad (12)$$

$\dot{m}_{22,Abgas,WS}$ = Abgasmassenstrom
$c_{p,22}$ = Wärmekapazität des Abgasstroms,
und wobei die Regelgröße $Tws$ in einem Bereich von 700 bis 1200°C liegt und in Abhängigkeit von $Tws$ zumindest die Heizleistung $Q_{20}$ als Stellgröße derart gesteuert wird, dass $Q_{20}$ in einem Bereich von 0,5 bis 3 kW pro Kilogramm Silicium in der Wirbelschicht liegt.

2. Verfahren nach Anspruch 1, **dadurch gekennzeichnet, dass** die Heizleistung $Q_{20}$ pro Kilogramm Silicium in der Wirbelschicht in einem Bereich von 1 bis 2 kW, bevorzugt von 1,3 bis 1,6 kW, liegt.

3. Verfahren nach Anspruch 1 oder 2, **dadurch gekennzeichnet, dass** als Stellgröße die Fluidisierung in der Wirbelschicht als Verhältnis aus Gasleerrohrgeschwindigkeit u und Minimalfluidisierungsgeschwindigkeit $u_{mf}$ derart gesteuert wird, dass $u/u_{mf}$ in einem Bereich von 1 bis 6 liegt, wobei sich u aus Gleichung (14) ergibt

$$u = \frac{\dot{N}\overline{M}}{A\rho_{Gas}},$$
$$(14)$$

mit

$\overline{M}$ = mittlere molare Masse des Gases in der Wirbelschicht [kg/mol]
N = Stoffmengenstrom des Abgases aus der Wirbelschicht [mol/s]
A = Querschnittsfläche der Wirbelschicht [m$^2$] $\rho_{Gas}$ = Dichte des Gases in der Wirbelschicht [kg/m$^3$] und wobei sich $u_{mf}$ aus Gleichung (15) ergibt

$$u_{mf} = 42,8(1-\psi)\frac{v}{d_S}\left[\sqrt{1 + 3,11 * 10^{-4}\frac{\Psi_{mf}^3}{(1-\Psi_{mf})^2}\frac{(\rho_{Partikel}-\rho_{Gas})g d_S^3}{\rho_{Gas}v^2}} - 1\right]$$
$$(15)$$

mit
$\psi$ = Festbettporosität
v = Viskosität des Gases in der Wirbelschicht [m$^2$/s]
$ds$ = Sauterdurchmesser der Partikel in der Wirbelschicht[m]
$\Psi_{mf}$ = Lockerungsporosität

$\rho_{Partikel}$ = Dichte der Partikel in Wirbelschicht [kg/m$^3$] $g$ = 9,81 m/s$^2$.

4. Verfahren nach Anspruch 3, **dadurch gekennzeichnet, dass** $u/u_{mf}$ in einem Bereich von 2 bis 5, bevorzugt von 3 bis 4, liegt.

5. Verfahren nach Anspruch 3 oder 4, **dadurch gekennzeichnet, dass** das Verhältnis $u/u_{mf}$ während des Verfahrens konstant gehalten wird.

6. Verfahren nach Anspruch 3 oder 5, **dadurch gekennzeichnet, dass** $\rho_{Partikel}$ in einem Bereich von 2,250 bis 2,330 g/cm$^3$, bevorzugt von 2,280 bis 2,330 g/cm$^3$, besonders bevorzugt von 2,320 bis 2,330 g/cm$^3$, liegt.

7. Verfahren nach einem der Ansprüche 3 bis 6, **dadurch gekennzeichnet, dass** $\rho_{Gas}$ in einem Bereich von 0,5 bis 2 kg/m$^3$, bevorzugt von 0,7 bis 1,2 kg/m$^3$, liegt.

8. Verfahren nach einem der Ansprüche 3 bis 7, **dadurch gekennzeichnet, dass** $\psi$ in einem Bereich von 0,3 bis 0,36 kg/m$^3$ liegt, bevorzugt 0,33 beträgt.

9. Verfahren nach einem der Ansprüche 3 bis 8, **dadurch gekennzeichnet, dass** $\Psi_{mf}$ in einem Bereich von 0,33 bis 0,4 liegt, bevorzugt 0,37 beträgt.

10. Verfahren nach einem der Ansprüche 3 bis 9, **dadurch gekennzeichnet, dass** $ds$ in einem Bereich von 150 bis 10000 $\mu$m, bevorzugt von 500 bis 5000, besonders bevorzugt von 850 bis 2000 $\mu$m, liegt.

11. Verfahren nach einem der vorhergehenden Ansprüche,
**dadurch gekennzeichnet, dass** als Stellgröße die Keimpartikel-Dosiermenge in Kilogramm Keimpartikel pro Kilogramm Silicium in der Wirbelschicht derart gesteuert wird, dass sie in einem Bereich von 0,01 bis 0,05, bevorzugt von 0,02 bis 0,03, liegt.

12. Verfahren nach einem der vorhergehenden Ansprüche, **dadurch gekennzeichnet, dass** die Temperatur der Wirbelschicht $Tws$ in einem Bereich von 800 bis 1150°C, bevorzugt von 850 bis 1100°C, liegt.

13. Verfahren nach einem der vorhergehenden Ansprüche, **dadurch gekennzeichnet, dass** das Siliciumgranulat einen Chlorgehalt von 10 bis 70 ppmw, bevorzugt von 15 bis 40 ppmw, aufweist.

14. Verfahren nach einem der vorhergehenden Ansprüche, **dadurch gekennzeichnet, dass** die Zusammensetzung des Abgasstroms 22 mit einem Gaschromatographen bestimmt wird.

**Claims**

1. Process for producing polycrystalline silicon granulate in a fluidized bed reactor, wherein in a fluidized bed region continuously supplied seed particles are fluidized in a fluidized bed by means of a gas flow, wherein the fluidized bed region is heated with a heating apparatus, wherein supply of a feed gas stream comprising hydrogen and silane and/or halosilane causes elemental silicon to be deposited on the seed particles to form the polycrystalline silicon granulate and wherein in a continuous process the silicon granulate is discharged from the fluidized bed reactor as a product stream, wherein as a responding variable the fluidized bed temperature $Tws$ is determined as the temperature $T_{offgas,WS}$ of an offgas stream from the fluidized bed region $\dot{m}_{22,offgas,WS}$ by means of the mass and energy balance of a balance ambit I and/or a balance ambit II, wherein the balance ambit I is composed of the

- enthalpy $\dot{H}_{16}$ of the feed gas stream $\dot{m}_{16,feed\ gas}$,
- enthalpy $\dot{H}_{21}$ of a seed particle stream into the fluidized bed region $\dot{m}_{21,KP,WS}$,
- enthalpy $\dot{H}_{18}$ of the product stream $\dot{m}_{18,Product}$,
- enthalpy $\dot{H}_{22}$ of the offgas mass flow from the fluidized bed region $\dot{m}_{22,offgas,WS}$,
- reaction enthalpy $\Delta_R H_{23}$,
- heating output of the heating apparatus $Q_{20}$,
- energy removal from the reactor in the fluidized bed region $Q_{24}$;
and the enthalpy of the offgas stream $\dot{H}_{22}$ for the balance ambit I is given by equation (10)

$$\dot{H}_{22} = \dot{H}_{16} - \dot{H}_{18} - Q_{24} - \Delta_R H_{23} + Q_{20} + \dot{H}_{21} \qquad (10);$$

and wherein the balance ambit II is composed of the
- enthalpy $\dot{H}_{21}$ of the seed particle stream into the fluidized bed region $\dot{m}_{21,KP,WS}$,
- enthalpy $\dot{H}_{17}$ of the seed particle stream into the reactor $\dot{m}_{17,KP,Reactor}$,
- enthalpy $\dot{H}_{22}$ of the offgas mass flow from the fluidized bed region $\dot{m}_{22,offgas,WS}$,
- enthalpy $\dot{H}_{19}$ of an offgas stream from the reactor $\dot{m}_{19,offgas,Reactor}$,
- energy removal from the reactor in the region above the fluidized bed $Q_{25}$
and the enthalpy $\dot{H}_{22}$ of the offgas stream for the balance ambit II is given by equation (11)

$$\dot{H}_{22} = -\dot{H}_{21} + \dot{H}_{17} - \dot{H}_{19} - Q_{25} \qquad (11);$$

wherein the temperature of the fluidized bed *Tws* is given by equation (12)

$$T_{WS} = T_{offgas,WS} = \frac{\dot{H}_{22}}{\dot{m}_{22,offgas,WS} * c_{p,22}}, \quad \text{where} \qquad (12)$$

$\dot{m}_{22,offgas,WS}$ = offgas mass flow
$c_{p,22}$ = heat capacity of the offgas stream,
and wherein the responding variable *Tws* is in a range from 700°C to 1200°C and according to *Tws* at least
the heating output $Q_{20}$ is as a manipulated variable controlled such that $Q_{20}$ is in a range from 0.5 to 3 kW
per kilogram of silicon in the fluidized bed.

2.  Process according to Claim 1, **characterized in that** the heating output $Q_{20}$ per kilogram of silicon in the fluidized
bed is in a range from 1 to 2 kW, preferably from 1.3 to 1.6 kW.

3.  Process according to Claim 1 or 2, **characterized in that** as a manipulated variable the fluidization in the fluidized
bed as the ratio of the superficial gas velocity u to the minimum fluidization velocity $u_{mf}$ is controlled such that $u/u_{mf}$
is in a range from 1 to 6, wherein u is given by equation (14)

$$u = \frac{\dot{N}\overline{M}}{A\rho_{Gas}},$$
$$(14)$$

where

$\overline{M}$ = average molar mass of the gas in the fluidized bed [kg/mol]
$\dot{N}$ = amount-of-substance flow of the offgas from the fluidized bed [mol/s]
A = cross sectional area of the fluidized bed [m²] $\rho_{Gas}$ = density of the gas in the fluidized bed [kg/m³] and
wherein $u_{mf}$ is given by equation (15)

$$u_{mf} = 42.8(1 - \psi)\frac{v}{d_s}\left[\sqrt{1 + 3.11 * 10^{-4}\frac{\Psi_{mf}^3}{(1-\Psi_{mf})^2}\frac{(\rho_{Particle}-\rho_{Gas})gd_S^3}{\rho_{Gas}v^2}} - 1\right]$$

$$(15)$$

where
ip = fixed bed porosity
$v$ = viscosity of the gas in the fluidized bed [m²/s]
$ds$ = sauter diameter of the particles in the fluidized bed [m]
$\Psi_{mf}$ = incipient fluidization porosity $\rho_{Particle}$ = density of the particles in the fluidized bed [kg/m³]
$g$ = 9.81 m/s².

4. Process according to Claim 3, **characterized in that** $u/u_{mf}$ is in a range from 2 to 5, preferably from 3 to 4.

5. Process according to Claim 3 or 4, **characterized in that** the ratio $u/u_{mf}$ is kept constant during the process.

6. Process according to Claim 3 or 5, **characterized in that** $\rho_{Particle}$ is in a range from 2.250 to 2.330 g/cm$^3$, preferably from 2.280 to 2.330 g/cm$^3$, particularly preferably from 2.320 to 2.330 g/cm$^3$.

7. Process according to any of Claims 3 to 6, **characterized in that** $\rho_{Gas}$ is in a range from 0.5 to 2 kg/m$^3$, preferably from 0.7 to 1.2 kg/m$^3$.

8. Process according to any of Claims 3 to 7, **characterized in that** $\psi$ is in a range from 0.3 to 0.36 kg/m$^3$, preferably 0.33.

9. Process according to any of Claims 3 to 8, **characterized in that** $\Psi_{mf}$ is in a range from 0.33 to 0.4, preferably 0.37.

10. Process according to any of Claims 3 to 9, **characterized in that** $ds$ is in a range from 150 to 10 000 $\mu$m, preferably from 500 to 5000 $\mu$m, particularly preferably from 850 to 2000 $\mu$m.

11. Process according to any of the preceding claims, **characterized in that** as a manipulated variable the seed particle introduction amount in kilograms of seed particles per kilogram of silicon in the fluidized bed is controlled such that it is in a range from 0.01 to 0.05, preferably from 0.02 to 0.03.

12. Process according to any of the preceding claims, **characterized in that** the temperature of the fluidized bed $Tws$ is in a range from 800°C to 1150°C, preferably from 850°C to 1100°C.

13. Process according to any of the preceding claims, **characterized in that** the silicon granulate has a chlorine content of 10 to 70 ppmw, preferably of 15 to 40 ppmw.

14. Process according to any of the preceding claims, **characterized in that** the composition of the offgas stream 22 is determined with a gas chromatograph.

## Revendications

1. Procédé pour la production de granulé de silicium polycristallin dans un réacteur à lit fluidisé, dans lequel des particules germes introduites en continu dans une zone de lit fluidisé sont fluidisées en un lit fluidisé au moyen d'un flux de gaz, dans lequel la zone de lit fluidisé est chauffée par un dispositif de chauffage, dans lequel, par apport d'un flux de gaz d'alimentation contenant de l'hydrogène et un silane et/ou halogénosilane, du silicium élémentaire est déposé sur les particules germes avec formation du granulé de silicium polycristallin, et dans lequel, dans un processus continu, le granulé de silicium est évacué en tant que courant de produit hors du réacteur à lit fluidisé, dans lequel en tant que grandeur de réglage est déterminée la température $T_{LF}$ du lit fluidisé en tant que température $T_{gaz\ rejeté,LF}$ d'un flux de gaz rejeté provenant de la zone de lit fluidisé $\dot{m}_{22,gaz\ rejeté,\ LF}$ au moyen du bilan de matières et d'énergie d'un espace de bilan I et/ou d'un espace de bilan II, l'espace de bilan I étant composé de

- l'enthalpie BiG du flux de gaz d'alimentation $\dot{m}_{16,gaz\ d'alimentation}$,
- l'enthalpie $\dot{H}_{21}$ d'un courant de particules germes dans la zone de lit fluidisé $\dot{m}_{21,\ PG,\ LF}$,
- l'enthalpie $\dot{H}_{18}$ du courant de produit $\dot{m}_{18,produit}$,
- l'enthalpie $\dot{H}_{22}$ du flux massique de gaz rejeté provenant de la zone de lit fluidisé $\dot{m}_{22,gaz\ rejeté,\ LF}$,
- l'enthalpie de réaction $\Delta_R H_{23}$,
- la puissance de chauffage du dispositif de chauffage $Q_{20}$,
- la dissipation d'énergie provenant du réacteur dans la zone de lit fluidisé $Q_{24}$ ;
et l'enthalpie du flux de gaz rejeté $\dot{H}_{22}$ pour l'espace de bilan I résultant de l'équation (10)

$$\dot{H}_{22} = \dot{H}_{16} - \dot{H}_{18} - Q_{24} - \Delta_R H_{23} + Q_{20} + \dot{H}_{21}$$

$$(10) \ ;$$

et l'espace de bilan II étant composé de
- l'enthalpie $\dot{H}_{21}$ du courant de particules germes dans la zone de lit fluidisé $\dot{m}_{21,PG,LF}$,

- l'enthalpie $\dot{H}_{17}$ du courant de particules germes dans le réacteur $\dot{m}_{17,\ PG,\ réacteur,}$
- l'enthalpie $\dot{H}_{22}$ du flux massique de gaz rejeté provenant de la zone de lit fluidisé $\dot{m}_{22,gaz\ rejeté,\ LF,}$
- l'enthalpie $\dot{H}_{19}$ d'un flux de gaz rejeté provenant du réacteur $\dot{m}_{19,gaz\ rejeté,\ réacteur,}$
- la dissipation d'énergie provenant du réacteur dans la zone au-dessus du lit fluidisé $Q_{25}$ et l'enthalpie $\dot{H}_{22}$ du flux de gaz rejeté pour l'espace de bilan II résultant de l'équation 11

$$\dot{H}_{22} = -\dot{H}_{21} + \dot{H}_{17} - \dot{H}_{19} - Q_{25} \qquad (11)\ ;$$

la température du lit fluidisé $T_{LF}$ résultant de l'équation (12)

$$T_{LF} = T_{gaz\ rejeté,\ LF} = \frac{\dot{H}_{22}}{\dot{m}_{22,gaz\ rejeté,\ LF}*c_{p,22}},$$

où

$\dot{m}_{22,gaz\ rejeté,\ LF,}$ = flux massique de gaz rejeté
$C_{p,22}$ = capacité thermique du flux de gaz rejeté,
et la grandeur de réglage $T_{LF}$ se situant dans une plage de 700 à 1 200 °C et en fonction de $T_{LF}$ au moins la puissance de chauffage $Q_{20}$ étant réglée en tant que grandeur de réglage de telle façon que $Q_{20}$ se situe dans une plage de 0,5 à 3 kW par kilogramme de silicium dans le lit fluidisé.

2. Procédé selon la revendication 1, **caractérisé en ce que** la puissance de chauffage $Q_{20}$ par kilogramme de silicium dans le lit fluidisé se situe dans une plage de 1 à 2 kW, de préférence de 1,3 à 1,6 kW.

3. Procédé selon la revendication 1 ou 2, **caractérisé en ce qu'**en tant que grandeur de réglage la fluidisation dans le lit fluidisé est réglée en tant que rapport entre vitesse de gaz en tube vide u et vitesse minimale de fluidisation $u_{mf}$ de telle façon que $u/u_{mf}$ se situe dans une plage de 1 à 6, u résultant de l'équation (14)

$$u = \frac{\dot{N}\overline{M}}{A\rho_{gaz}}, \qquad (14),$$

où

$\overline{M}$ = masse molaire moyenne du gaz dans le lit fluidisé [kg/mole]
$\dot{N}$ = flux de quantité de matière du gaz rejeté provenant du lit fluidisé [moles/s]
$A$ = surface de section transversale du lit fluidisé [m$^2$]
$\rho_{gaz}$ = densité du gaz dans le lit fluidisé [kg/m$^3$] et $u_{mf}$ résultant de l'équation (15)

$$u_{mf} = 42,8(1-\psi)\frac{v}{d_s}\left[\sqrt{1 + 3,11*10^{-4}\frac{\Psi_{mf}^3}{(1-\Psi_{mf})^2}\frac{(\rho_{particules}-\rho_{gaz})gd_s^3}{\rho_{gaz}\ v^2}} - 1\right]$$

$$(15)$$

où
$\psi$ = porosité du lit fixe
$v$ = viscosité du gaz dans le lit fluidisé [m$^2$/s]
$D_s$ = diamètre de Sauter des particules dans le lit fluidisé [m]
$\Psi_{mf}$ = porosité de fluidisation
$\rho_{particules}$ = densité des particules dans le lit fluidisé [kg/m$^3$]
$g$ = 9,81 m/s$^2$.

4. Procédé selon la revendication 3, **caractérisé en ce que** $u/u_{mf}$ se situe dans une plage de 2 à 5, de préférence de 3 à 4.

**5.** Procédé selon la revendication 3 ou 4, **caractérisé en ce que** le rapport $u/u_{mf}$ est maintenu constant pendant le processus.

**6.** Procédé selon la revendication 3 ou 5, **caractérisé en ce que** $\rho_{particules}$ se situe dans une plage de 2,250 à 2,330 g/cm$^3$, de préférence de 2,280 à 2,330 g/cm$^3$, de façon particulièrement préférée de 2,320 à 2,330 g/cm$^3$.

**7.** Procédé selon l'une quelconque des revendications 3 à 6, **caractérisé en ce que** $\rho_{gaz}$ se situe dans une plage de 0,5 à 2 kg/m$^3$, de préférence de 0,7 à 1,2 kg/m$^3$.

**8.** Procédé selon l'une quelconque des revendications 3 à 7, **caractérisé en ce que** $\psi$ se situe dans une plage de 0,13 à 0,36 kg/m$^3$, de préférence vaut 0,33.

**9.** Procédé selon l'une quelconque des revendications 3 à 8, **caractérisé en ce que** $\Psi_{mf}$ se situe dans une plage de 0,33 à 0,4, de préférence vaut 0,37.

**10.** Procédé selon l'une quelconque des revendications 3 à 9, **caractérisé en ce que** $d_s$ se situe dans une plage de 150 à 10 000 $\mu$m, de préférence de 500 à 5 000, de façon particulièrement préférée de 850 à 2 000 $\mu$m.

**11.** Procédé selon l'une quelconque des revendications précédentes, **caractérisé en ce qu'**en tant que grandeur de réglage la quantité dosée de particules germes en kilogramme de particules germes par kilogramme de silicium dans le lit fluidisé est réglée de telle façon qu'elle se situe dans une plage de 0,01 à 0,05, de préférence de 0,02 à 0,03.

**12.** Procédé selon l'une quelconque des revendications précédentes, **caractérisé en ce que** la température du lit fluidisé $T_{LF}$ se situe dans une plage de 800 à 1 150 °C, de préférence de 850 à 1 100 °C.

**13.** Procédé selon l'une quelconque des revendications précédentes, **caractérisé en ce que** le granulé de silicium présente une teneur en chlore de 10 à 70 ppm en poids, de préférence de 15 à 40 ppm en poids.

**14.** Procédé selon l'une quelconque des revendications précédentes, **caractérisé en ce que** la composition du flux de gaz rejeté 22 est déterminée au moyen d'un chromatographe en phase gazeuse.

Fig. 1

EP 4 182 266 B1

Fig. 2

17

M

19

16

18

Fig. 3

17

M

19

BII

21  22

25

20

23

16

24

18

BI

19

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1990314 A2
- EP 2662334 A1
- EP 2514521 A1
- EP 2653446 A2